Europäisches Patentamt

European Patent Office

Office européen des brevets

(19)

(11) EP 0 671 845 B1

(12) **EUROPEAN PATENT SPECIFICATION**

(45) Date of publication and mention
of the grant of the patent:
**17.05.2000   Bulletin 2000/20**

(51) Int Cl.[7]: **H04N 1/41**, H04N 7/26

(21) Application number: **95301576.5**

(22) Date of filing: **10.03.1995**

(54) **Multi-dimensional image data compression and decompression**

Datenreduktion und -expansion für mehrdimensionale Bilder

Compression et décompression de données d'images multidimensionnelles

(84) Designated Contracting States:
**DE FR GB**

(30) Priority: **12.03.1994   JP   6788294**

(43) Date of publication of application:
**13.09.1995   Bulletin 1995/37**

(73) Proprietor: **VICTOR COMPANY OF JAPAN
LIMITED
Yokohama-Shi Kanagawa-Ken (JP)**

(72) Inventors:
• **Kawauchi, Masayo
Kamakura-shi, Kanagawa-ken (JP)**
• **Hozumi, Yoshiko
Zushi-shi, Kanagawa-ken (JP)**

• **Shimizu, Kyoichi
Yokohama-shi, Kanagawa-ken (JP)**

(74) Representative: **Crawford, Andrew Birkby et al
A.A. Thornton & Co.
235 High Holborn
London WC1V 7LE (GB)**

(56) References cited:
EP-A- 0 164 825          JP-A- 2 263 277
JP-A- 5 167 998          US-A- 4 189 711

• **SYSTEMS AND COMPUTERS IN JAPAN, vol. 16,
no. 4, July 1985 - August 1985, pages 29-36,
XP000568685 M. NAKAJIMA ET AL.: "A Coding
Method of Gray-Valued Pictures Using Density
Contour Lines"**

**Description**

BACKGROUND OF THE INVENTION

The present invention relates to a method of compressing and decompressing a multi-dimensional image. Particularly, the present invention relates to a method of effectively compressing and decompressing a multidimensional image for image transmission between apparatuses, such as different types of data transmitters and receivers, in which pixels or frames on the time axis not necessarily correspond to each other between a compression side and a decompression side.

Several methods of compressing image data have been proposed. For example, there is a linear (equal) quantising method in which the sampled values of a digitalized video signal are equally divided into signal levels and the sampled values included in each signal level are replaced with a representative value. According to this method, discretisation by 6 bits (64 gradations) to 8 bits (256 gradations) is generally necessary for a natural image for neglecting differences between the representative values and original values. A lot of data thus needs to be processed per sampled value when a video signal digitalized by equal quantization is recorded as it is.

In a conventional method, digital data compressed by an effective coding method is recorded or transmitted and then reproduced or received, and decompressed to reproduce an image. The human being's characteristics is utilized in this method, such as vision or hearing, that he or she is sensitive to any change in a signal that is varying a little, while not so sensitive to change (or error) in a signal that is varying much. Also utilized is correlation between signals to be recorded on the time-spatial axis. Under such utilization, an image is divided into pixels and a few of approximated values of the original image are transmitted using the level of correlation between luminance values of pixels close to each other. Alternatively, differences between pixels or frames are transmitted. An amount of data per sampled value may be decreased by decreasing frequency components using the fact that high frequency components are less in an image than low frequency components.

The conventional method mostly needs the condition that the number of pixels must be equal to each other between original and reproduced (decompressed) images because pixels must be well reproduced. It is thus necessary that some pixels must be interpolated or extracted after decompression when compression and decompression are conducted to images with different number of pixels. This means that at reproduction this method depends, to some extent, on physical image components, such as the number of pixels, their shapes and the level of luminance, without selecting true data and reproducing them.

Here is considered the case that spatial resolution is extremely different in two images of different number of pixels. For example, an image taken by photographic equipment is used as a printing plate for an electric printer. The spatial resolution of the photographed image is at most 500 x 500 per image frame. Compared to this, spatial resolution of the image of an electric printer is some thousands which is extremely great. Aliasing occurs in this case due to the increase in the number of pixels (by interpolation) of the image after decompression even if the conventional compression and decompression method in which the number of pixels are equal to each other between original and reproduced images is not employed.

Further, in the case where interpolation is conducted without increase in pixels, since a large interpolation area is filled with average values of weighted data, image deterioration due to interpolation distortion cannot be avoided.

On the other hand, in the case where the spatial resolution of an original image is some thousands, since correlation between pixels close to each other on the original image is extremely high, principally effective image compression is possible. However, by the conventional method, the more the number of pixels, the more the amount of data without respect to the content of the original image. Furthermore, the conventional method cannot achieve high compression ratio if the original image is coarse.

The applicant of the present invention has already proposed the following multi-dimensional image compressing and decompressing method which solves such problems.

Firstly, feature points (pixels) of an image to be processed are selected to obtain image data in which the image is compressed disregarding the level of spatial resolution. When decompressing, the original image is reproduced not using the image data but using feature points, such as positive and negative maximum points on the curvature of luminance contour lines on the luminance function of the original image with two-dimensional luminance data or the curvature of luminance contour planes on the luminance function of the original image with three-dimensional luminance data (including the time-axis), as if a new image is displayed on another spatial resolution plane.

Alternatively, pixels are selected as feature points when a difference between an approximate line (plane) of a luminance contour line (plane) on the luminance function and the luminance contour line (plane) on each pixel is greater than a predetermined reference value. The data of positions and luminance values of the feature points thus obtained are transmitted or recorded.

When the data of positions and luminance values are used in image reproduction, luminance data on pixels not being feature points is decided at decompression using an interpolation plane or solid formed by means of feature points close to the pixels not being feature points.

Alternatively, a plurality of luminance data are selected from the luminance function of three-dimensional image data including the time-axis. Pixels are selected as feature points when the distance between the approximate line of a luminance contour line on the luminance function for the selected luminance data and the luminance contour line is greater than a predetermined reference value. The data of positions and luminance values of the feature points thus obtained are transmitted or recorded.

When the data of positions and luminance values are used in image reproduction, luminance data on pixels not being feature points is decided at decompression using an interpolation solid formed by means of feature points close to the pixels not being feature points.

In this method, however, texture data on an object surface in an image is mostly neglected in data compression. This is because the texture exists in an extremely small part of the image even though it is very important characteristics of the object.

The conventional method mostly requires that original and reproduced (decompressed) images have the same number of pixels because the pixels must be well reproduced. Further in the case of motion pictures, this conventional method requires the same number of images or frames per second. However, when image reproduction is made by compressing the luminance function composed of pixels, the texture data which is a small part of an object surface is mostly neglected and an original image cannot be well reproduced.

In order to have further improvement in compression ratio without the condition that the number of pixels or frames on the time-axis must be the same before compression and after decompression, the luminance function is expressed with a lesser number of parameters. When decompressing in this case, the luminance function is reproduced generally using simple interpolation lines, planes or solids. The texture of an object surface is almost not reproduced in this case and decompressed image quality is very much deteriorated.

Other prior art image coding and compression methods are also known. For example, US-A-4189711 discloses a multilevel image processing method in which an image is scanned a line at a time into a register. Image region determination is then undertaken upon two consecutive scan lines at once, and codewords generated for each image region identified in the two scan lines.

US-A-5333012 presents a motion compensating coding method which relies on well-known human vision attributes to achieve motion compensated coding. The method is characterised in that the quantisation step size of the coding sampling is varied to maintain a target bit rate of coded data.

US-A-5357602 provides an apparatus for transforming a 2-level digital line image (ie. black and white) into contour vectors, the vectors defining the direction and magnitude of each line. Further processing is then applied to the contour vectors to distinguish between "unitary" (open) and closed loop figures within the image, the distinction thus drawn enabling enhanced memory usage and maintaining system processing speed.

EP-A-0164825 describes an apparatus and system for converting images into geometric information based on the Picture Description Instruction (PDI) codes used in the NAPLPS Videotext system in use in the US and Canada. The input image signal is divided into a plurality of areas, and each area is reduced to PDI basic patterns to encode the image information. Usually "POLYGON" commands are used as the NAPLPS syntax.

Finally, Nakajima et al in "A Coding Method of Grey-Valued Pictures Using Density Contour Lines", Systems and Computers in Japan, vol, 16, No. 4 pp 29-36, 1985, disclose a coding method for grey-level pictures in which density contour lines are traced in an image. By describing the image solely in terms of the contour lines then the images are effectively coded. The image can then be restored using only a fraction of the contour lines, typically 20% for an acceptable S/N ratio in the reproduced image. The use of only a fraction of the contour lines to reproduce only an out-line image of the original image allows for fast and efficient image searching of images coded according to this technique.

SUMMARY OF THE INVENTION

The purpose of the present invention is to provide an effective compression and decompression method with no problem such that texture data is lost.

The present invention provides a method of compressing and decompressing a video signal containing at least one image of at least two dimensions, said video signal including luminance data distributed at least in the two-dimensions, said video signal being compressed to be codes, the codes being decompressed to reproduce the analogue video signal, the method comprising the steps of:

extracting a number of representative pixels from a plurality of pixels constituting a digital signal of the video signal by tracing luminance contour lines in a luminance distribution function of the luminance data, each contour line connecting pixels of constant luminance value, and selecting pixels on the luminance contour lines as the representative pixels such that at the position of each representative pixel on the respective contour line the angle of curvature of the contour line is greater than a first pre-determined reference value;

extracting texture data from the digital signal of the video signal;

coding the representative pixels and the texture data;

decoding the coded representative pixels and the texture data; and

reproducing the video signal using the decoded representative pixels and the decoded texture data.

In the method, the coding step may include the step of orthogonally transforming the digital video data by discrete cosine transform.

In the method, when the luminance data is distributed in three dimensions, the pixel extracting step may include the steps of: tracing luminance contour planes in a luminance distribution function of the luminance data, each contour plane connecting pixels of constant luminance value; and selecting pixels on the luminance contour planes as representative pixels such that at the position of each representative pixel on the respective contour plane the angle of curvature of the contour plane is greater than the first pre-determined reference value.

In the method, the pixel extracting step may further include the step of: selecting further pixels on the luminance contour line as representative pixels by obtaining the distance from a line connecting a first pixel on the luminance contour line which has already been selected as a representative pixel and a second of said representative pixels on the luminance contour line to a third pixel on the luminance contour line, and comparing said distance with a second predetermined reference value so as to select said third pixel as another representative pixel when said distance exceeds said second pre-determined reference value.

In the method, when the luminance data is distributed in three dimensions, the pixel extracting step may further include the steps of: selecting further pixels on the luminance contour plane as representative pixels by obtaining the distance from a line connecting a first pixel on the luminance contour plane which has already been selected as a representative pixel and a second of said representative pixels on the luminance contour plane to a third pixel on the luminance contour plane, and comparing said distance with a second pre-determined reference value so as to select said third pixel as another representative pixel when said distance exceeds said second pre-determined reference value.

In the method, the texture extracting step may include the steps of: orthogonally transforming an area including a spatial frequency component higher than a reference spatial frequency in luminance function of the luminance data to obtain a frequency spectrum pattern; and extracting data of pixels on a border between at least a first and a second area having different absolute values of the frequency spectrum pattern and data of frequency spectrum patterns of the first and second areas as the texture data.

In the method, the decoding step may include the step of randomizing the sign of at least one spectral component of the coded texture data when decoding the coded texture data.

In the method, the decoding step may include the step of randomizing the phase of the coded texture data when decoding the coded texture data.

In the method, the reproducing step may include the step of deciding luminance data of pixels except the representative pixels constituting the video data by interpolation plane formed with the decoded with luminance values of an interpolation representative pixels.

In the method, when the video data is motion picture data, the texture data extracting step may include the steps of: selecting texture data of a first still image at a first period of time; and transferring the texture data of the first still data in accordance with moving vectors of the first still image and of a second still image at a second period of time different from the first period of time to obtain texture data of the second still image.

BRIEF DESCRIPTION OF DRAWINGS

FIGS. 1A and 1B are illustrations for explaining the multi-dimensional image compression and decompression method according to the present invention;

FIG. 2 is an illustration for explaining tracing luminance contour line and deciding feature points;

FIG. 3 is a circuit block diagram for the multidimensional image compression and decompression method according to the present invention;

FIGS. 4A and 4B are illustration for explaining tracing luminance contour line and deciding feature points;

FIG. 5 is an illustration for explaining the luminance function interpolation;

FIG. 6 is an illustration for explaining the feature point determination;

FIG. 7 is an illustration for explaining the feature point determination;

FIGS. 8A to 8D are illustration for explaining the multi-dimensional image compression and decompression method according to the present invention;

FIGS. 9A to 9H are frequency spectrum patterns for explaining the multi-dimensional image compression and decompression method according to the present invention;

FIG. 10 is a circuit block diagram of the luminance contour tracer-feature point selector used for the multi-dimensional image compression and decompression method according to the present invention;

FIG. 11 is a circuit block diagram of the texture extractor used for the multi-dimensional image compression and decompression method according to the present invention;

FIG. 12 is a circuit block diagram of the border line detector used for the multi-dimensional image compression and decompression method according to the present invention;

FIG. 13 is a circuit block diagram of the luminance function reproducer used for the multi-dimensional image compression and decompression method according to the present invention;

FIG. 14 is a circuit block diagram of the texture reproducer used for the multi-dimensional image compression and decompression method according to the present invention;

FIG. 15 is an illustration for explaining the multidimensional image compression and decompression method according to the present invention in three-dimensions; and

FIG. 16 is an illustration for explaining the multidimensional image compression and decompression method according to the present invention for motion pictures.

## DETAILED DESCRIPTION OF THE PREFERRED EMBODIMENTS

The preferred embodiments of the multi-dimensional image compression and decompression method according to the present invention will be described with reference to drawings.

The method according to the present invention is to conduct effective compression and decompression to image data that spreads out two-dimensionally or three-dimensionally (including the time-axis). The image data to be processed by the method of the present invention includes an image of luminance data (black and white) and also a color image of lightness and chromaticity (hue and saturation). The following description discusses the multi-dimensional image compression to image data of luminance only.

A still image is expressed by the equation (1):

$$z = f(x, y) \qquad (1),$$

where z is luminance in a still image of black and white and x and y are horizontal and vertical directions of the image, respectively.

Further, a motion picture is expressed by the equation (2):

$$z = f(x, y, t) \qquad (2),$$

where t is the time-axis.

When f is the multi-function, the luminance z in an image is expressed by the equation (3):

$$z = A_1 x + A_2 x^2 + \cdots \cdots + A_n x^n + B_1 y + B_2 y^2 + \cdots \cdots +$$

$$B_n y^n + C_1 t + C_2 t^2 + \cdots \cdots + C_n t^n + D \qquad (3).$$

Transmission of an image can be said to reproduce at a receiving side the luminance function expressed by the equation (3) decided at a transmission side. However, a digital image is processed in general such that all table values on the table function are transmitted without analytical treatment of the luminance function. In conventional data compression and transmission, effective coding is conducted utilizing correlation between the table values or orthogonally transformed table values. However, there are few compression and transmission methods that directly select feature points of the luminance function by its analytical treatment.

The multi-dimensional image compression and decompression method according to the present invention conducts the following process to a still image of two- or three-dimensional (including the time-axis) luminance data.

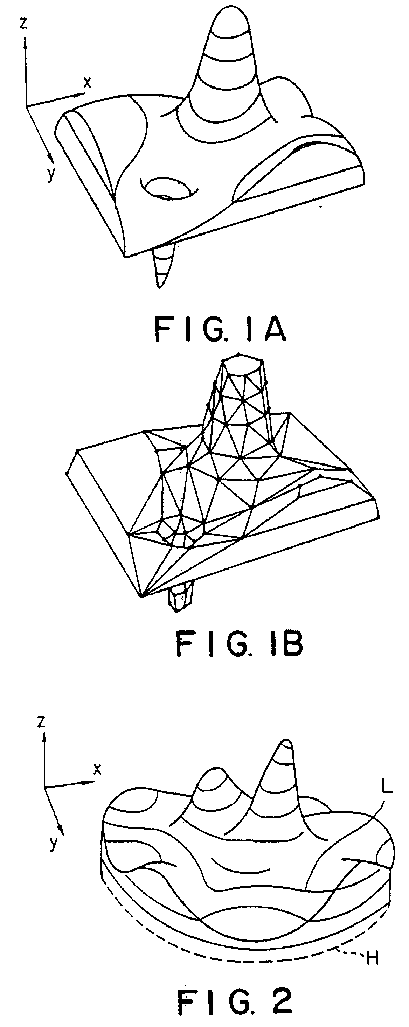

Luminance contour lines (planes in case of three dimensions) are selected as shown in FIGS. 1A and 2. Pixels are decided as feature points of the image in such a way that, at these pixels, if differences between the selected luminance conture lines (planes in the three-dimensional case) and positive and negative maximum points on the curvature of the selected lines (planes) or differences between the luminance conture lines (planes) and approximate lines (planes) of the lines (planes) are greater than a predetermined reference value. Data of positions and luminance values of the feature points only are used for transmission (recording) and image reproduction with neglecting luminance data of pixels unimportant for image reproduction.

With this method, large amounts of image data can be compressed. Further, areas of the luminance function with high spatial frequency components higher than a predetermined spatial frequency value are orthogonally transformed to have texture areas with equal and different absolute spectrum patterns. Texture data is then generated which is of data on spectrum and pixels on a border between texture areas of different absolute spectrum patterns. In decompression, the texture data is added to interpolation planes (or solids) decided by the feature points to have effectively a high quality decompressed image with the texture data.

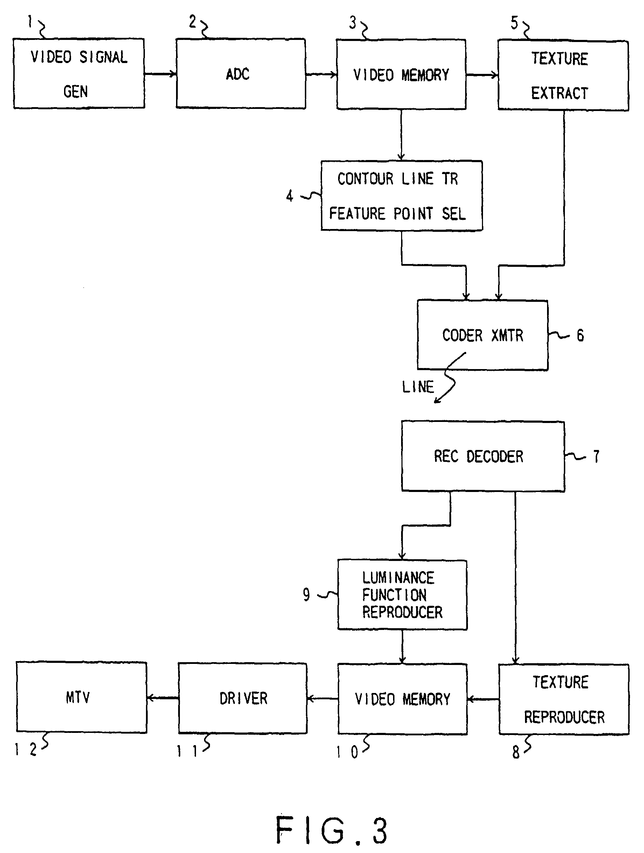

Figure 3 shows a circuit block diagram explaining the multi-dimensional image compression and decompression method according to the present invention.

The system of FIG. 3 includes a video signal generator (source) 1 generating a video signal to be processed. The source 1 is of a TV camera, VTR, etc., generating a video signal. The system further includes an analog-to-digital converter 2, a video memory 3, a contour line tracer-feature point selector 4, a texture producer (texture extractor) 5, a coder-transmitter 6, a receiver-decoder 7 (reproducer-decoder), a texture reproducer 8, a luminance function reproducer 9, a video memory 10, a driver 11 and a monitor 12.

The principles of compression and decompression (reproduction) of image data in the present invention will be described before discussing the operation of the system of FIG. 3.

Feature points of an image are selected as described later at which differences between the luminance contour lines and positive and negative maximum values on the curvature of the luminance contour lines (planes in three-dimension) on the luminance function or approximate straight lines (planes) of the luminance contour lines are greater than a predetermined reference value.

A pixel to be processed is judged as a feature point of an image when:

1. the curvature of a contour line (plane in three-dimension) exists before and after the pixel to be processed exceeds a predetermined reference angle; or
2. the pixel to be processed is distant from an imaginary straight line drew according to the contour line between a pixel already decided as a feature point and another pixel and the distance exceeds a predetermined reference distance.

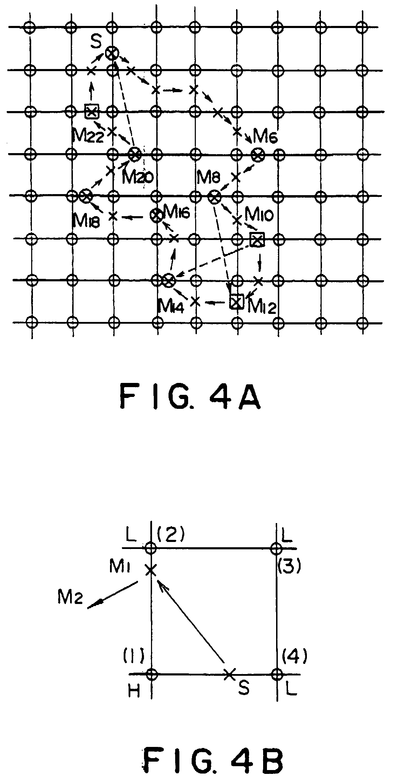

The method of deciding feature points of an image to be compressed and decompressed using methods (1) or (2) will be discussed further in detail with reference to FIGS. 4A and 4B showing the luminance distribution function in a two-dimensional still image.

Figure 4A shows a contour line in the luminance distribution function in a two-dimensional image and is traced as follows:

In FIG. 4B, points (1) to (4) are four pixels and these luminance values are expressed as H and L. These symbols represent high and low luminance values, respectively. Discussion will proceed with a point (pixel) S firstly selected as a starting point. Since the point S is located between the pixels (1) and (4), the luminance value of the point S can be a proportionally distributed value of the luminance value according to the luminance values of the pixels (1) and (4).

Detection is made whether there is a point of the same luminance value as that of the point S in the order of the sides (1) - (2), (2) - (3), (3) - (4) of the square made of the pixels (1) to (4), to trace a luminance contour line on which exist the point S and other points of the same luminance value as that of the point S.

Firstly, a point $M_1$ is detected on the side (1) - (2) which has the same luminance value as that of the point S. After the point $M_1$ is detected, the same step is repeated to detect other points (not shown) of the same luminance value as that of the point S. Accordingly, the luminance contour line is traced on which exist the point S and other points of the same luminance value as that of the point S. In tracing a luminance contour line, a side of the square that crosses a luminance contour line already traced is neglected except the side (1) - (4) on which the starting point S exists.

As described above, a contour line of the luminance distribution function in two-dimensional image as shown in FIG. 4A is traced by detecting points of the same luminance value as that of a predetermined starting point.

In FIG. 4A, points $M_6$, $M_8$, $M_{14}$, $M_{16}$, $M_{18}$ and $M_{20}$ on which a contour line traced with the starting point S suddenly changes its direction are judged as feature points according to the judging method (1) described above. After the points $M_8$ and then a point $M_{12}$ both of the same luminance value as that of the point S is detected, a point $M_{10}$ that is distant by a specific distance from an imaginary dot line $M_8$ - $M_{12}$ is judged as a feature point according to the judging method (2) described above. The point $M_{12}$ and a point $M_{22}$ are also judged as feature points according to the method (2).

Since the luminance distribution function in a two-dimensional image is replaced with contour lines on which feature points only exist while neglecting other points not detected as feature points, highly compressed data can be transmitted or recorded by the multi-dimensional image compression and decompression method according to the present invention.

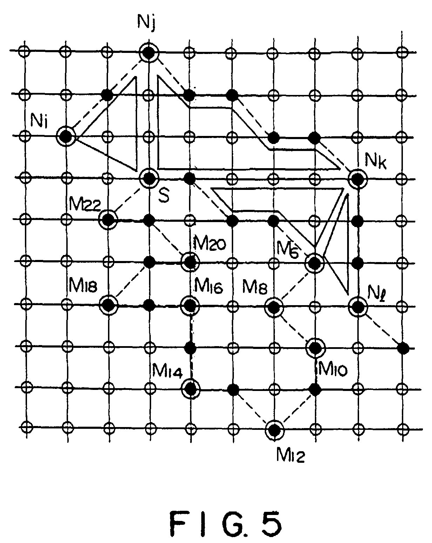

A decompression method is employed to reproduce an image by decompressing the highly compressed and transmitted (recorded) image data. By this method, decided is a luminance value of a point corresponding (not necessarily corresponding to a pixel of an original image) in a decompressed image to a feature point and influences of feature points on peripheral points becomes weaker in proportion to the distance between the feature and peripheral points. Image data decompressing is conducted with straight line interpolation between feature points in one-dimension and with plane or solid interpolation in multi-dimension. The principle of such image data decompression will be described with reference to FIG. 5.

Figure 5 shows a luminance contour line for a group M of feature points reproduced on a video memory for reproduction using position data (addresses) of the feature points $M_6$, $M_8$, $M_{12}$, $M_{14}$, $M_{16}$, $M_{18}$, $M_{20}$ and $M_{22}$ and depicted with a dot line connecting these points. Another dot line connecting feature points $N_i$, $N_j$, $N_k$ and $N_l$ is a luminance contour line for a group N of feature points.

When the inner area between the contour lines of M and N groups of feature points is filled with luminance values of the N group, a pseudo edge phenomenon occurs due to the level difference between luminance values of the inner area and an area surrounded by the contour line of M group. This results in a deteriorated decompressed image. To avoid the pseudo edge phenomenon, the luminance values of the feature points of M and N groups are plane-interpolated with luminance values obtained by approximate calculation expressed by the equation (A):

$$za = \Sigma\,(zi\,/\,ri)\,/\,\Sigma\,(1\,/\,ri) \qquad (A),$$

where $\underline{a}$ is a pixel in a decompressed image, ri is a distance from the pixel $\underline{a}$ to feature points and za and zi are luminance values of the pixel $\underline{a}$ and the feature points, respectively.

Further, the relationship between the luminance value za and a luminance value zk of one of the feature points k is expressed by the interpolation equation (4):

$$za = zk + \alpha k \times rk \qquad (4),$$

where $\alpha$ is a proportional constant, the second term $\alpha k \times rk$ of the right side is a difference between the luminance values of the pixel $\underline{a}$ and the feature point k and is proportion to the distance r. The term $\alpha k \times rk$ further has positive and negative values depending on the proportional constant $\alpha$. The total of proportional constant $\alpha$ in the whole interpolation space is zero and expressed by the equation (5).

$$\Sigma\,\alpha k = 0 \qquad (5)$$

Deletion of $\alpha k$ in the equation (4) under the condition (5) results in the general interpolation equation (4) for the luminance value za of the pixel $\underline{a}$.

The equation (4) shows that luminance values of all uninterpolated pixels in an image can be obtained by interpolation. These pixels have no necessity of corresponding to an original image. The equation (4) however requires unpractical huge amount of calculation due to increase in feature points. An interpolated luminance value is thus approximately calculated using an interpolation plane decided by three feature points close to an uninterpolated pixel.

Interpolation triangles are obtained using groups of three feature points close to an uninterpolated pixel because one plane is decided by three points in space. Luminance values of pixels within each of triangles made of three feature points ($N_i$, $N_j$ and S), ($N_k$, $M_6$ and S) and ($N_j$, $N_k$ and S) are plane-interpolated by approximate calculation with the equation (A).

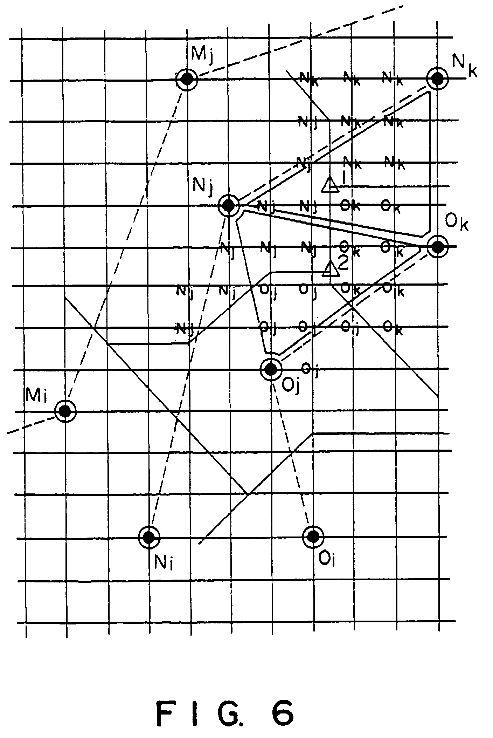

Deciding an interpolation plane for the plane interpolation requires detecting three feature points which surround and are close to uninterpolated pixels. The principle of detecting three feature points will be described with reference to FIG. 6.

In FIG. 6, pixels $M_i$ and $M_j$ are the feature points on a luminance contour line of pixels with the same luminance value M; pixels $N_i$, $N_j$ and $N_k$ are the feature points on a luminance contour line of pixels with the same luminance value N; and pixels $O_i$, $O_j$ and $O_k$ are the feature points on a luminance contour line of pixels with the same luminance value O. In decompression, data of each feature point group with the same luminance value is stored into a video memory for reproduction.

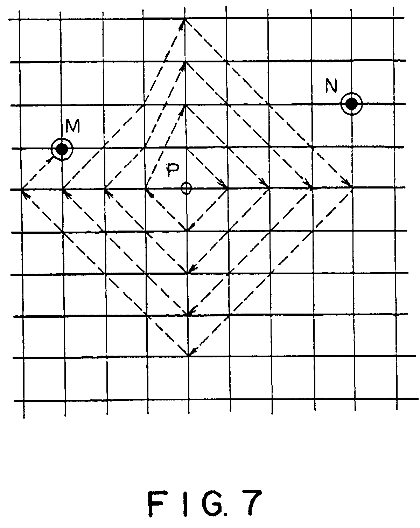

Described below is decision on, which feature point, a pixel except feature points is close to. Figure 7 shows two pixels (feature points) M and N both close to a pixel P. Search starts at the pixel P along a spiral path depicted by a dot line and reaches the feature point M before the feature point N. Judgement is made such that the pixel P is located not close to the feature point N but M. Data of the pixel P is provided with a sign representing that the pixel P is located within an area of the feature point M.

Figure 6 shows that a plurality of pixels except feature points have signs representing areas in which these pixels are located by the method described above. The dot lines connecting the feature points are borders or limits of influence of the feature points.

For example, three pixels $N_j$, $N_k$ and $O_k$ in FIG. 6 are close to a border $\triangle1$ of three areas. The pixels $N_j$, $N_k$ and $O_k$ are judged as closed three feature points and a triangle made of these points is decided as a luminance interpolation plane. Luminance values of pixels within the triangle made of the points $N_j$, $N_k$ and $O_k$ are represented by the luminance values in the luminance interpolation plane.

Next, three pixels $N_j$, $O_j$ and $O_k$ in FIG. 6 are close to a border $\triangle2$ of three areas. The pixels $N_j$, $O_j$ and $O_k$ are judged as close three feature points and a triangle made of these points is decided as a luminance interpolation plane. Luminance values of pixels within the triangle made of the points $N_j$, $O_j$ and $O_k$ are represented by the luminance values in the luminance interpolation plane.

By searching a pixel area under influence of a feature point in an extended plane (solid in case of three dimensions), close three feature points (four in case of three dimensions) are detected from the border of the pixel area which is under the influence of the feature point.

The luminance function in decompression is thus decided using a small amount of data of feature points and each luminance value of untransmitted image data is represented by an interpolation value obtained with the equation (A) to reproduce a whole image.

Figure 1B shows an image reproduced using a luminance interpolation plane. An extended plane in two dimensions may be a circle, square, rectangular and lozenge. In three dimensions, an extended solid may be a sphere, spherical ellipse, two circular cones connected to each other with bottoms as symmetrical faces and two pyramids connected to each other with bottoms as symmetrical faces.

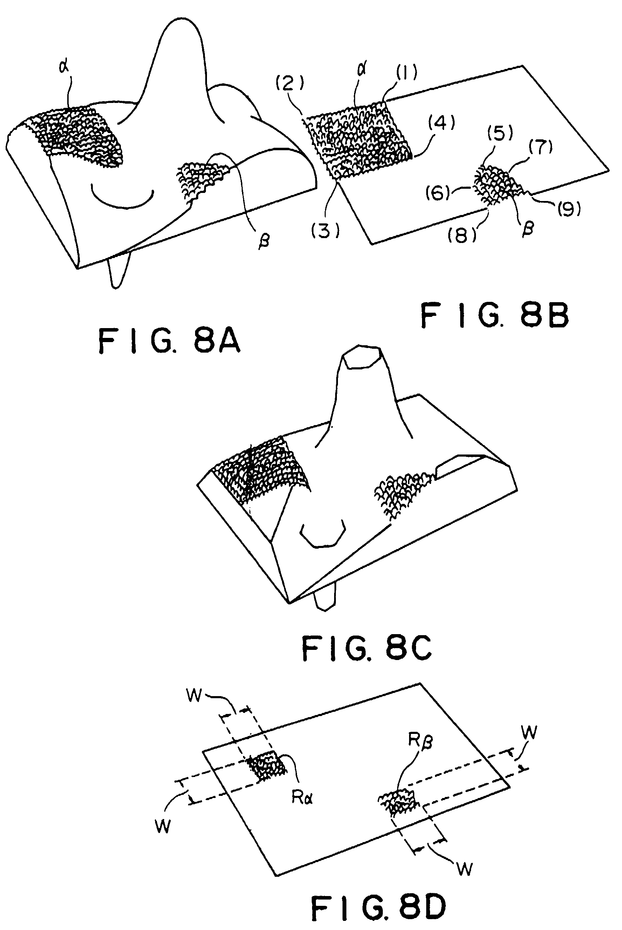

In a natural image, textures α and β of an object exist as shown in FIG. 8A added to the whole luminance function structure shown in FIGS. 1A and 2. And how an image is naturally reproduced depends on how the luminance function and textures are reproduced. The luminance interpolation plane of FIG. 1B however teaches that difficulty lies in reproduction of the textures due to the fact that fine portions of the luminance function of an extended image is decided by interpolation.

The multi-dimensional image compression and decompression method according to the present invention thus separately processes the luminance function and the textures. The luminance function is processed in the way described above.

The textures are processed as follows: An area of the luminance function having spatial frequency components higher than a predetermined reference spatial frequency is othogonally transformed to obtain a frequency spectrum pattern. Texture areas having the same first frequency spectrum pattern are put into a first group. Further, texture areas having the same second frequency spectrum pattern are put into a second group. Texture data of border pixels and frequency spectrum pattern is generated in each of the first and second groups. In decompression, the texture data is added to an interpolation plane or solid decided by close feature points described above.

The luminance function including texture of FIG. 8A thus can be treated as a combination of the function of different frequency components as shown in FIGS. 1A and 8B. The multi-dimensional image compression and decompression method according to the present invention conducts first and second signal processing separately to two different frequency components functions according to their frequency bands: the first is described with reference to FIG. 1B; the second is, in FIG. 8B, for the texture α the area surrounded by the border pixels (1) to (4) and the texture β the area surrounded by the border pixels (5) to (9).

The texture data of an object image may be a combination of a frequency spectrum pattern obtained in the area of spatial frequency components higher than a predetermined reference value and border pixels of the area. In FIG. 8B, the area surrounded by a border line made of the pixels (1) to (4) is the texture area α of the same texture with spatial frequency components higher than a first reference value. Further, the area surrounded by a border line made of the pixels (5) to (9) is the texture area β of the same texture with spatial frequency components higher than a second reference value different from the first value. Orthogonal transform, such as, discrete cosine transform (DCT) is applied to portions Rα and Rβ of the areas α and β, respectively. Figure 8D shows that the portions Rα and Rβ are orthogonally transformed with W in width and height. The textures thus obtained are used for transmission (recording) and reproduction of the texture of an image.

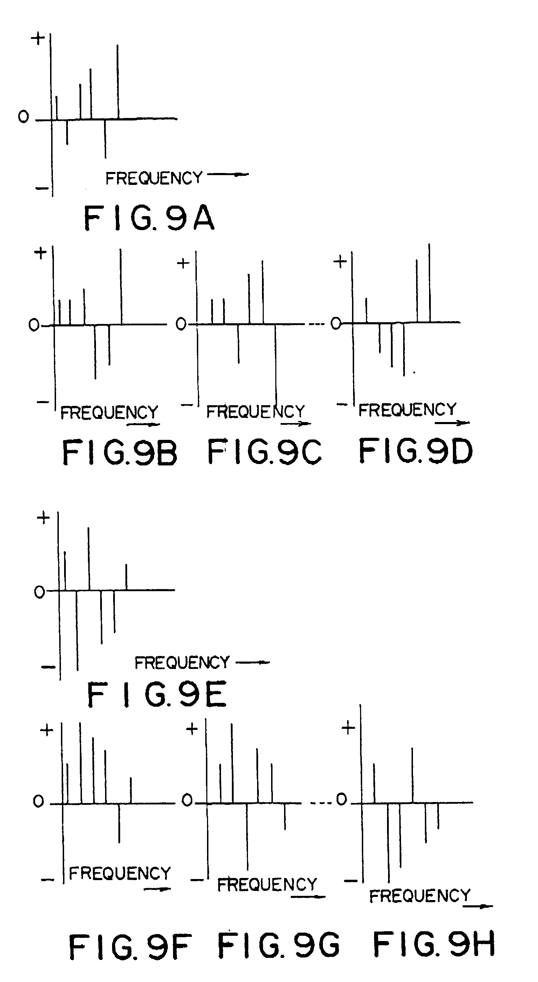

The frequency spectrum pattern obtained in each area is, one-dimensionally, as shown in FIG. 9A, a pattern with absolute values of the spectrum that monotonously increase as the frequency increases. Alternatively, the pattern is, as shown in FIG. 9E, a pattern with absolute values of the spectrum that monotonously decrease as the frequency increases.

In reproduction of an image, inverse orthogonal transform, such as, inverse discrete cosine transform (IDCT) is made to the frequency spectrum patterns in the areas of the pixels (1) to (4) and (5) to (9). The results of the inverse orthogonal transform are added to the luminance function to obtain a reproduced image with texture.

The frequency spectrum patterns thus inverse orthgonally transformed correspond to the portions Rα and Rβ shown in FIG. 8B. This means that the textures obtained by inverse orthgonal transform are not the texture of whole areas of the pixels (1) to (4) and (5) to (9).

For example, if the whole area of the pixels (1) to (4) is filled with the texture obtained by inverse orthgonally transforming the frequency spectrum pattern corresponding to the portion Rα of FIG. 8B, the whole area seems to have the same pattern repeatedly stuck on. This results in an unnatural image reproduced.

The method to avoid such a problem will be described with an example in that the frequency spectrum pattern corresponding to the portion Rα (or Rβ) of FIG. 8B is the pattern shown in FIG. 9A (or 9E). Generated first are frequency spectrum patterns (square areas of the same size) shown in FIGS. 9B to 9D (or 9F to 9H) by randomizing only the codes of the spectrum patterns with no change in the absolute values of the frequency spectrum pattern in FIG. 9A (or 9E). The texture of the whole area of the pixels (1) to (4) {or (5) to (9)} of FIG. 8B is then reproduced by sticking the generated frequency spectrum patterns shown in FIGS. 9B to 9D (or 9F to 9H) on the whole area of the pixels (1) to (4) {or (5) to (9)} of Fig. 8B.

When the texture of the whole area of the pixels (1) to (4) is reproduced by this method, the edges of the portion Rα are sometimes reproduced as cross stripes-like border lines, because the edges of the portion Rα are not in succession with another portion Rα (not shown) in the luminance function. Since these cross stripes-like border lines are pseudo-signals, the generation thereof can be decreased by applying low band-pass characteristics to pixels close to the cross stripes-like border lines.

According to these methods, the luminance function in decompression is decided based on a small number of feature point data and the luminance values of untransmitted pixel data are interpolated with the luminance values of the luminance interpolation plane to reproduce a whole image. This reproduced image is of high quality because the texture data is added to the interpolation plane (solid) decided using the close feature points described above.

As understood from these descriptions, what is shared in compression and decompression is the luminance function of an image. The number of pixels is not necessarily the same in compression and decompression because in the present invention the positional data of feature points of an image are of relative value to the whole image. The feature point data detected in the present invention are reproduced according to the number of pixels (resolution) in decompression.

The multi-dimensional image compression and decompression method according to the present invention will further be described with reference to FIG. 3. The video signal generator (or source, such as a TV camera) 1 generates video signals under a particular standard for telecommunication. The generator 1 in this embodiment generates monochrome video signals of motion picture. The video signals are fed to the analog-to-digital convertor 2 that converts the signals to digital signals of, such as 8 bits per pixel, the number of pixels per image being, such as, 512 and 480 in the horizontal and vertical directions.

The digital signals are fed to the video memory 3 that extracts a specific luminance contour line in an image to decide feature points and generates the texture data of the image. The video memory includes two memory portions (not shown) and by switching these two memory portions, data writing and data reading that is executed for feature points determination are executed in parallel.

The output signals of the video memory 3 are fed to the contour line tracer-feature point selector 4 and the texture extractor 5. The former traces luminance contour lines of image data and decides feature points and the latter extracts the texture data of an image and decides feature points.

The output signals of the contour line tracer-feature point selector 4 and the texture extractor 5 are fed to the coder-transmitter 6. The output signals are transformed into codes, such as Huffman codes, by the coder-transmitter 6 and transmitted to the receiver-decoder 7 via a transmission line. The receiver-decoder 7 decodes the codes and feeds the decoded signals to the texture reproducer 8 and the luminance function reproducer 9. When a storage medium is employed instead of the transmission line, the coder-transmitter 6 and the receiver-decoder 7 may be recording and reproduction circuits, respectively.

The texture reproducer 8 reproduces the textures and stores them into the video memory 10. The luminance function reproducer 9 reproduces the two-dimensional luminance function in the state prior to compression using the fed feature point data. The reproduced two-dimensional luminance function is stored into the video memory 10.

The luminance values of pixels of the reproduced two-dimensional luminance function and the textures are read out from the video memory 10 and fed to the driver 11. The luminance values of pixels and the textures are transformed into analog sequential signals (video signals) by the driver 11. The video signals are fed to the monitor 12 that displays an original image.

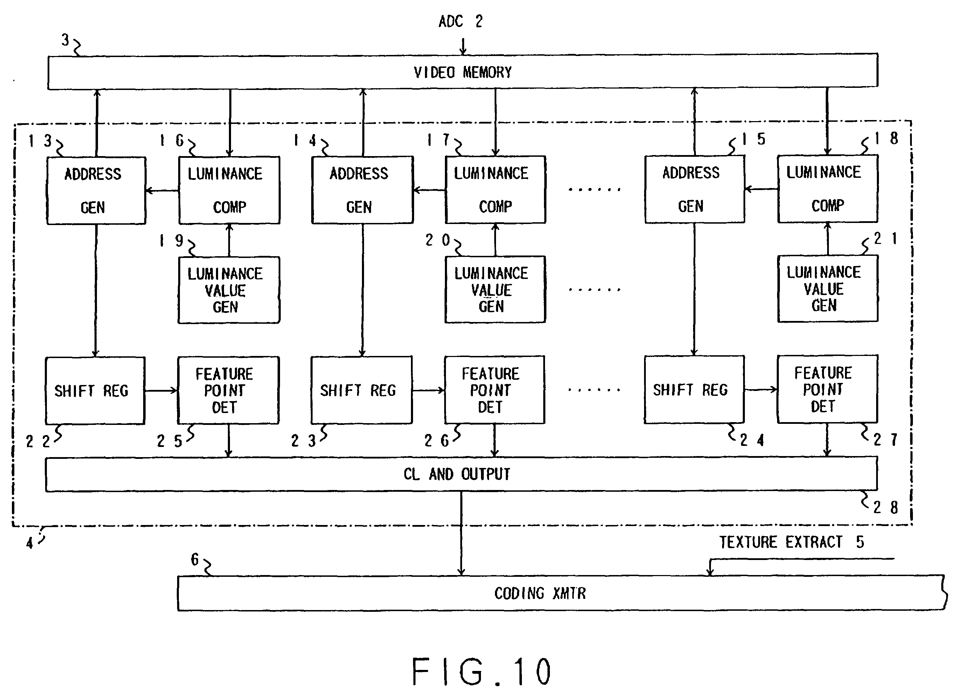

Figure 10 shows the video memory 3 and a block diagram of the contour line tracer-feature point selector 4 connected by a plurality of transmission lines. The contour line tracer-feature point selector 4 includes address generators 13, 14 and 15; luminance comparators 16, 17 and 18; luminance value generators 19, 20 and 21; shift registers 22, 23 and 24; feature point detector 25, 26 and 27 and a classify- output circuit 28. The number of generators, comparators, registers and detectors depends on the number of data communicated with the video memory 3 via the transmission lines.

The address generators 13, 14 and 15 generate address data which are fed to the video memory 3. Luminance data are read from the storage fields in the video memory 3 at the addresses designated by the address data. The luminance data read from the video memory 3 and other luminance data generated by the luminance value generators 19, 20 and 21 are fed to the luminance comparators 16, 17 and 18.

The luminance comparators 16, 17 and 18 compare the luminance data from the video memory 3 and from the luminance value generators 19, 20 and 21 to feed the comparison results to the address generators 13, 14 and 15.

In response to the comparison results, the address generators 13, 14 and 15 generate new data (including intermediate addresses between pixel addresses) corresponding to, for example, the pixel $M_1$ shown in FIG. 4B, the new data being fed to the video memory 3.

The luminance data read from the storage fields in the video memory 3 at the addresses designated by the new data are fed to the luminance comparators 16, 17 and 18. Comparison is made again by the luminance comparators 16, 17 and 18 between the luminance data fed from the memory 3 and from the luminance value generators 19, 20 and 21, the comparison results being fed to the address generators 13, 14 and 15.

By repeating these operations, addresses are sequentially generated at which exist luminance values approximately equal to the luminance values depicted by the luminance data generated by the luminance value generators 19, 20 and 21. When an address thus generated is an intermediate value between pixel addresses shown in FIGS. 4A and 4B, this address is replaced with an address close to the intermediate value and the operations are repeated.

The addresses thus generated by the address generators 13, 14 and 15 are fed to the shift registers 22, 23 and 24 that feed parallel outputs to the feature point detectors 25, 26 and 27. When each of the shift address registers 22, 23 and 24 accumulates address data of specific number of pixels, such as 10 pixels, a new address is fed to and an old address is cleared from each of the feature point detectors 25, 26 and 27. At this timing, the feature point detectors 25, 26 and 27 detect pixels among the addresses to be feature points according to the judging methods described above.

The addresses and luminance values of the feature points are fed to the classify-output circuit 28. The addresses and luminance values are classified according to their luminance contour lines each composed of the same luminance values and output to the coder-transmitter 10 from the classify-output circuit 28 as the outputs of the contour line tracer-feature point selector 4.

The video memory 3 is of a multi-port configuration, or has a plurality of input and output ports because the contour line tracer-feature point selector 4 traces a plurality of luminance contour lines in parallel.

In timing, the contour line tracer-feature point selector 4 completes selection of feature points per image frame (or field in interlaced scanning), when it completes scanning of the frame. The output signals of the contour line tracer-feature point selector 4 are fed to the coder-transmitter 6 that encodes the output signals into Huffman codes and transmits these codes to the receiver-decoder 7 via the transmission line. The feature point selection for a posterior image frame in the contour line tracer-feature point selector 4 is completed within periods of time for the coding into the Huffman codes and transmission of the Huffman codes to the receiver-decoder 7. The number of the feature points to be selected may be restrict by changing the reference angle or distance for feature point selection when the periods of time for the coding and transmission exceed the scanning time per frame.

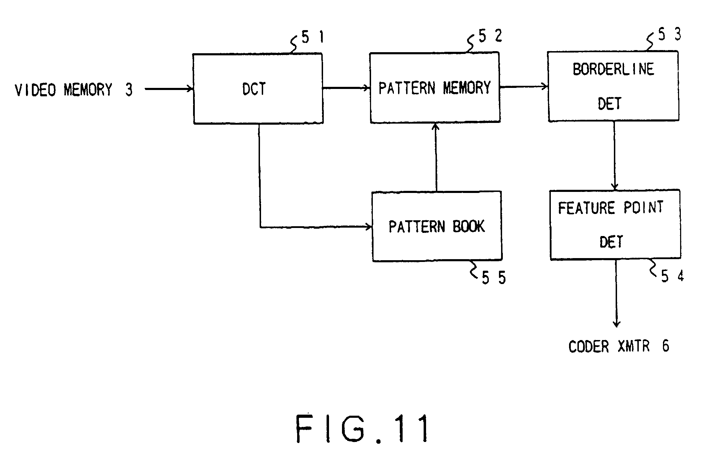

The texture extractor 5 includes as shown in FIG. 11 an orthgonal transformer 51, a pattern memory 52, a border line detector 53, a feature point detector 54 and a pattern book 55. The orthgonal transformer 51 may be a two-dimensional discrete cosine transformer that easily randomize codes of the spectrum patterns only. However, the orthgonal transformer 51 may be of any type that generates frequency spectrum patterns.

In FIG. 11, the digital signals read out from the video memory 3 are fed to the orthgonal transformer 51 that transforms the digital signals into the frequency spectrum patterns by two-dimensional discrete cosine transform per texture field. The frequency spectrum patterns are fed to the pattern memory 52 and the pattern book 55. Further fed to the pattern memory 52 are pattern numbers generated by the pattern book 55, the pattern numbers corresponding to patterns of high frequency components obtained by two-dimensional discrete cosine transform.

At the completion of storing the texture pattern data per frame into the pattern memory 52, the border line detector 53 detects border of fields with the same number and feeds border data to the feature point detector 54.

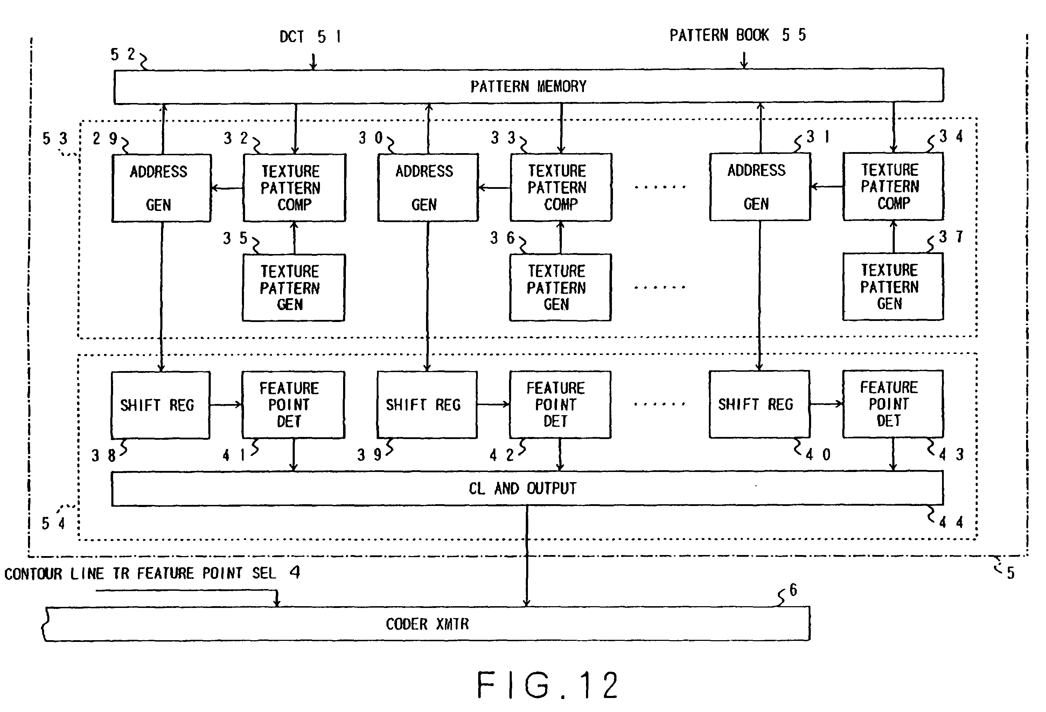

The border line detector 53 includes as shown in FIG. 12 address generators 29 to 31, texture pattern comparators (detectors), texture pattern number generators 35 to 37. The feature point detector 54 includes as shown in FIG. 12 shift registers 38 to 40, feature point detectors 41 to 43 and a classify-output circuit 44.

The border line detector 53 and the feature point detector 54 detects the border lines and feature points, respectively, the same as the contour line tracer-feature point selector 4 for the luminance function.

In FIG. 12, positional data of feature points on a border line per texture field and pattern numbers corresponding to the inner border area are generated by the classify-output circuit 44 and fed to the coder-transmitter 6. The feature point data of an image to be compressed fed from the contour line tracer-feature point selector 4 and the positional data of feature points on a border line per texture field and pattern numbers corresponding to the inner border area both fed from the texture extractor 5 are transmitted from the coder-transmitter 6 to the receiver-decoder 7.

The receiver-decoder 7 decodes the transmitted codes and feeds decoded signals to the texture reproducer 8 and the luminance function reproducer 9.

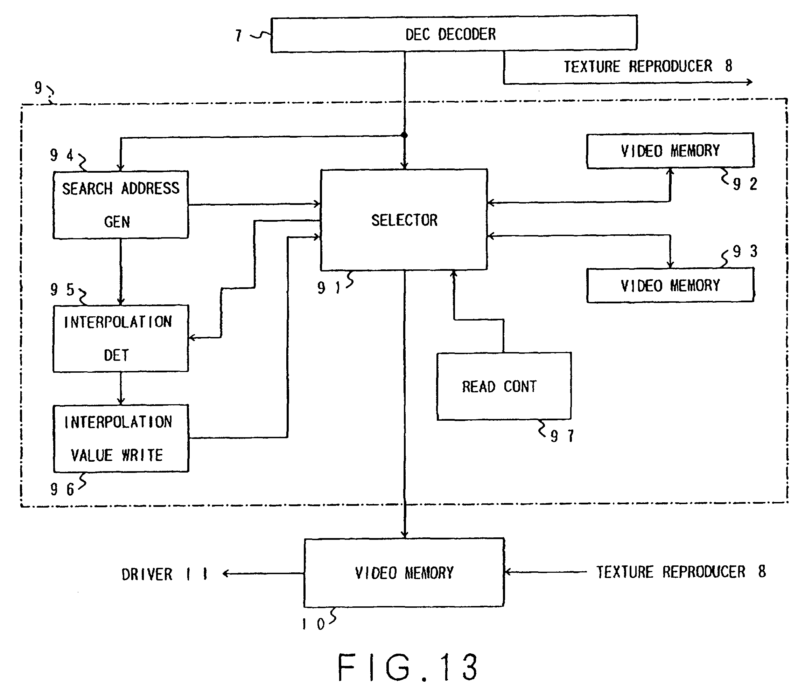

The luminance function reproducer 9 includes as shown in FIG. 13 a selector 91, video memories 92 and 93, a search address generator 94, an interpolation plane detector 95, an interpolation value writer 96 and a read controller 97. Under this configuration, the luminance function reproducer 9 reproduces the two-dimensional luminance function in the state prior to compression using the feature point data fed from the receiver-decoder 7.

When the feature point data, that is, addresses and luminance values of the feature points are fed to the luminance function reproducer 9, the feature point data are fed to and stored into either of the memories 92 and 93. These memories are selectable for high-speed data decompression by simultaneous operations of decompression and displaying the decompressed data by means of the selected memories. The search address generator 94 generates addresses of pixels except the feature points (pixels) stored into the memory 92 (or 93), traces the feature points closet to the address-generated pixels by the method already described and puts the signs onto the address-generated pixels, the signs representing that the address-generated pixels are located in the area of the feature points (attribute area of the feature points).

The interpolation plane detector 95 reads out the attribute area from the memory 92 (or 93) to trace the area border to select three feature points for interpolation decision among the close area-signed feature points.

The interpolation value writer 96 calculates the interpolation values in the inner area of an interpolation triangle decided in the memory 92 (or 93) and writes the interpolation values into the memory 92 (or 93) to represent the luminance values of the pixels in the innerarea except the feature points with the interpolation values.

The read controller 97 reads the pixel data stored in the memory 92 (or 93) not the memory 93 (or 92) in operation to feed the pixel data to the video memory 10.

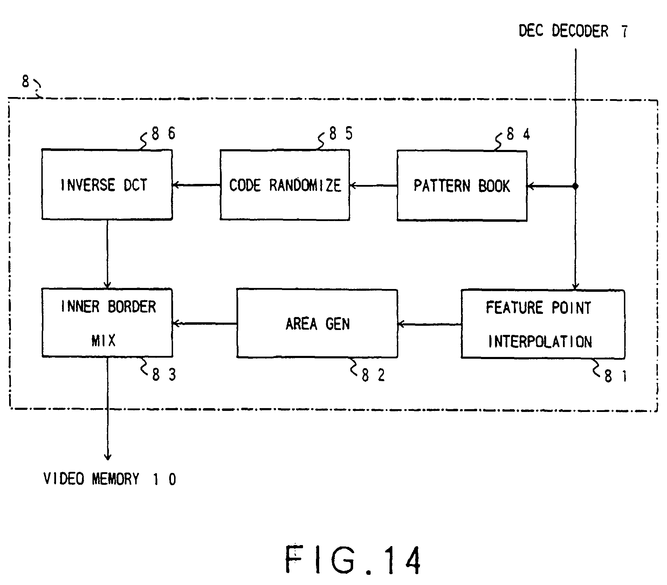

The texture reproducer 8 shown in FIG. 14 includes a feature point interpolator 81, an area generator 82, an inner boarder mixer 83, a pattern book 84, a code randomizer 85 and an inverse orthogonal transformer 86 (inverse two-dimensional destcrete consign transformer).

The feature point interpolator 81 reproduces border data from the feature point data fed from the receiver-decoder 7 and feeds the border data to the area generator 82 that generates the area data. The generated area data are fed to the inner boarder mixer 83.

The pattern book 84 generates the frequency spectrum patterns corresponding to the pattern numbers fed from the receiver-decoder 7. The generated frequency spectrum patterns are fed to the code randomizer 85 that randomizes only the codes of the frequency spectrum patterns. The randomized codes are fed to the inverse orthogonal transformer 86.

The inverse orthogonal transformer 86 inversely transforms the frequency spectrum pattern in which codes only are randomized by two-dimensional discrete consign transform to reproduce textures. The reproduced textures are fed to the inner boarder mixer 83 that puts the randomized textures into the decided texture display area to reproduce the texture area data. The reproduced texture area data are stored into the video memory 10. In reproduction of the texture area data by putting the randomized textures into the texture display area, the low-band pass filtering characteristics is applied to the pixel data close to the cross stripe borders already described to avoid display of the cross stripe borders.

The driver 11 in FIG. 3 reads the luminance value and texture data from the video memory 10 as sequential video signals with texture data under a specific standard for telecommunication. The driver 11 includes a digital-to-analog converter (not shown) to converts the sequential video signals into analog video signals and adds blanking and synchronizing signals to the analog video signals. The blanking and synchronizing signal-added analog video signals are fed to the monitor 12 to display a reproduced image on a screen.

The multi-dimensional image compression and decompression method described so far is for reproducing the two-dimensional luminance function. The method according to the present invention is further applicable to reproduction of three-dimensional luminance function by selecting feature points over a plurality of sequential images on the time axis.

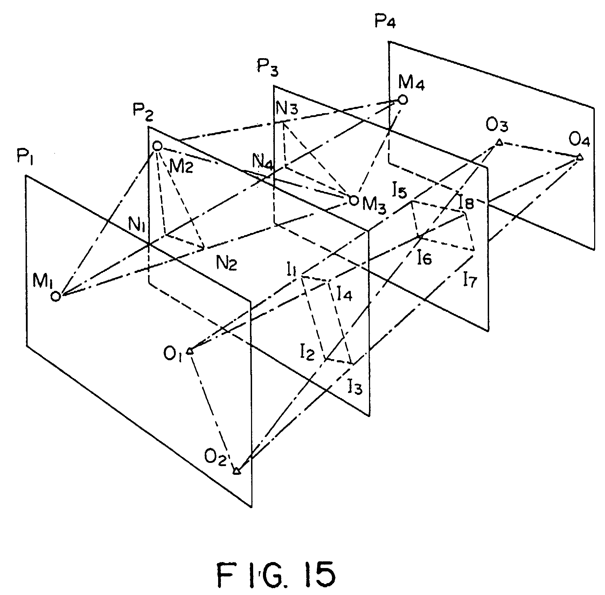

Figure 15 explains decision of the luminance values of pixels except feature points (pixels) using an interpolation solid decided by feature points detected using three-dimensionally distributed image data. Images (frames) $P_1$ to $P_4$ in FIG. 15 are still images arranged over the time-axis and as a whole the images are three-dimensionally distributed. Contour lines are obtained by tracing the two-dimensional luminance function in the still images $P_1$ to $P_4$ and contour planes can be obtained by extending the contour lines. The points $M_1$ to $M_4$ are feature points which are decided under the state that, at these points, the difference between the contour plane and positive or negative maximum points on the curvature of the contour plane or an approximate plane of the contour plane is greater than a reference value. When decided that the feature points are three-dimensionally close to a particular pixel, the interpolation solid is defined by the feature points $M_1$ to $M_4$. A triangles made of points ($M_2$, $N_1$ and $N_2$) and ($M_3$, $N_3$ and $N_4$) are the projections on the still images $P_2$ and $P_3$, respectively, of the interpolation solid defined by the feature points $M_1$ to $M_4$.

The luminance values of the apexes of each triangle are decided by interpolation calculation using the luminance values of the apexes of the interpolation solid defined by the feature points $M_1$ to $M_4$. Accordingly, luminance values of pixels existing in each triangle are decided by the same method as that of deciding luminance values of untransmitted pixels using the interpolation plane in the two-dimensional image data described above.

In FIG. 15, suppose that, without detection of three-dimensional feature points as described above, feature points ($O_1$ and $O_2$) and ($O_3$ and $O_4$) are obtained on the still images $P_1$ and $P_4$, respectively, by the two-dimensional feature point detection. When these feature points $O_1$, $O_2$, $O_3$ and $O_4$ are the three-dimensionally close points, an interpolation solid is defined by theses points. The projections on the still images $P_2$ and $P_3$ of the interpolation solid are squares made of points ($I_1$, $I_2$, $I_3$ and $I_4$) and ($I_5$, $I_6$, $I_7$ and $I_8$). Since a square is divided into triangles, a single interpolation plane can be defined also in this case. Accordingly, luminance values of pixels existing in each triangle are decided by the same method as that of deciding luminance values of untransmitted pixels using the interpolation plane in the two-dimensional image data described above.

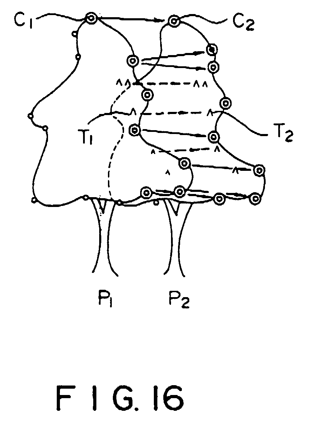

Figure 16 explains texture data processing in which the multi-image compression and decompression method according to the present invention is applied to processing a three-dimensional image. Depicted in FIG. 16 is a moving picture of a tree viewed from a running train. A tree $P_1$ is an image at a specific period of time and has textures of leaves. Depicted in the tree $P_1$ are a portion pattern (texture) $T_1$ and a point $C_1$ one of feature points on a texture boarder. Further depicted in FIG. 16 is a tree $P_2$ an image at a specific period of time following the period of time for the tree $P_1$ and has textures of leaves. Depicted in the tree $P_2$ are a portion pattern (texture) $T_2$ and a point $C_2$ one of feature points on a texture boarder.

Correspondence between feature points, such

as, the points $c_1$ and $c_2$ is achieved by obtaining moving vectors of the images $P_1$ and $P_2$. With the correspondence, the texture $T_2$ can be obtained by transferring and copying the texture $T_1$ in the direction of moving vector and its magnitude, not reproducing the textures $T_1$ and $T_2$, separately. Textures for images existing between the images $P_1$ and $P_2$ are represented by positional interpolation values.

Accordingly, to the compression of an image moving from $P_1$ to $P_2$, transfer of the luminance function only of a decompressed (reproduced) image can be reproduced with no change in naturalness of a moving image. Because the texture always follows the transfer of the luminance function with no random reproduction of the texture while transferring. In three-dimensional compression, thus, there is no necessity of transmitting texture data for a plurality of images following an image (a still image at a specific period of time) by transmitting texture data, such as, texture (pattern) numbers in a representative area of a specific texture in the still image and copying the texture data for the plurality of images.

Accordingly, the three-dimensional image compression in the present invention can achieve higher compression ratio than the two-dimensional image compression, with no deterioration of motion picture by transferring texture data following the luminance function representing edges of a moving object.

The multi-dimensional image compression and decompression method according to the present invention is also applicable to video signals of plurality of signals, such as, a composite signal of three primary colors or of luminance and color difference signals. In this case, what are shared by circuit elements described above are the luminance contour lines in the luminance function and addresses of texture-boarder lines and feature points for the plurality of signals.

As described above, the multi-dimensional image compression and decompression method according to the present invention is to extract feature points (pixels) on luminance contour lines of the luminance function of an image to obtain compressed image data. For texture data which may be neglected, its representative orthogonally transformed values or their numbers and feature points on texture border lines only are transmitted per texture data.

In decompression, the two- or three-dimensional luminance data are interpolated to be reproduced and, for representative orthogonally transformed values of the texture, the order and their absolute values are stored and their codes or phase are randomized. Accordingly, luminance values in texture areas of the same luminance level except a representative plane can be decided and a high quality image can be transmitted with a high compression ratio.

For the texture of the luminance function distributed in three-dimension, the texture is transferred and copied on a plurality of images which are to be interpolated in their directions. Accordingly, the luminance function of a decompressed image only is transferred to obtain a high quality image without a problem such that the texture does not follow the transfer of the luminance function or transfer of the texture is randomly reproduced to change naturalness of a moving picture.

In three-dimensional compression, texture numbers (patterns numbers), for example, in a representative area of a specific texture of a still image at a period of time are transmitted and textures of the following plurality of images are obtained by transferring and copying the specific texture in their directions, thus eliminating the transmission of the textures of the images.

Accordingly, the three-dimensional compression can achieve higher compression ratio than that of the two-dimensional compression and obtain a high quality moving picture because texture can be transmitted so as to follow the luminance function depicting edges of a moving object.

The multi-dimensional image compression and decompression method according to the present invention is also applicable to video signals of plurality of signals, such as, a composite signal of three primary colors or of luminance and color difference signals. In this case, what are shared by circuit elements described above are the luminance contour lines in the luminance function and addresses of texture-boarder lines and feature points for the plurality of signals.

**Claims**

1. A method of compressing and decompressing a video signal containing at least one image of at least two dimensions, said video signal including luminance data distributed at least in the two-dimensions, said video signal being compressed to be codes, the codes being decompressed to reproduce the analogue video signal, the method comprising the steps of:

   extracting a number of representative pixels from a plurality of pixels constituting a digital signal of the video signal by tracing luminance contour lines in a luminance distribution function of the luminance data, each contour line connecting pixels of constant luminance value, and selecting pixels on the luminance contour lines as the representative pixels such that at the position of each representative pixel on the respective contour line the angle of curvature of the contour line is greater than a first predetermined reference value;
   extracting texture data from the digital signal of the video signal;
   coding the representative pixels and the texture data;
   decoding the coded representative pixels and the texture data; and

reproducing the video signal using the decoded representative pixels and the decoded texture data.

2. A method according to claim 1, wherein the coding step includes the step of orthogonally transforming the digital video data by discrete cosine transforms.

3. A method according to claim 1, wherein when the video signal contains more than one image of at least two dimensions and the luminance data is distributed in the two dimensions in space and one dimension in time and the pixel extracting step comprises the steps of:-

   tracing luminance contour planes in a luminance distribution function of the luminance data, each contour plane connecting pixels of constant luminance value; and
   selecting pixels on the luminance contour planes as representative pixels such that at the position of each representative pixel on the respective contour plane the angle of curvature of the contour plane is greater than the first predetermined reference value.

4. A method according to claims 1 or 2, wherein the pixel extracting step further includes the step of selecting further pixels on the luminance contour line as representative pixels by obtaining the distance from a line connecting a first pixel on the luminance contour line which has already been selected as a representative pixel and a second of said representative pixels on the luminance contour line to a third pixel on the luminance contour line, and comparing said distance with a second predetermined reference value so as to select said third pixel as another representative pixel when said distance exceeds said second pre-determined reference value.

5. A method according to claim 3, wherein the pixel extracting step further includes the step of selecting further pixels on the luminance contour plane as representative pixels by obtaining the distance from a line connecting a first pixel on the luminance contour plane which has already been selected as a representative pixel and a second of said representative pixels on the luminance contour plane to a third pixel on the luminance contour plane, and comparing said distance with a second pre-determined reference value so as to select said third pixel as another representative pixel when said distance exceeds said second pre-determined reference value.

6. A method according to any of the preceding claims, the texture extracting step comprising the steps of:

orthogonally transforming an area including a spatial frequency component higher than a reference spatial frequency in luminance function of the luminance data to obtain a frequency spectrum pattern; and
extracting data of pixels on a border between at least a first and a second area having different absolute values of the frequency spectrum pattern and data of frequency spectrum patterns of the first and second areas as the texture data.

7. A method according to claim 6, the texture extracting step further comprising the steps of:

   distributing areas each having a frequency spectrum pattern whose absolute value is equal to the absolute value of the frequency spectrum pattern on the first or second areas into a first or a second group; and
   representing borders between areas in each of the first and second groups with the representative pixels.

8. A method according to claim 6, comprising the step of selecting a pre-determined frequency spectrum pattern based on the representative pixels.

9. A method according to any of claims 6 to 8 the decoding step comprising the step of randomizing the sign of at least one spectral component of the frequency spectrum pattern of the coded texture data when decoding the coded texture data.

10. A method according to any of claims 6 to 9, the decoding step comprising the step of randomizing the phase of at least one spectral component of the frequency spectrum pattern of the coded texture data when decoding the coded texture data.

11. A method according to any of the preceding claims, the reproducing step comprising the step of deciding luminance data of pixels except the representative pixels constituting the video data by interpolation with luminance values of an interpolation plane formed with the decoded representative pixels.

12. A method according to any of the preceding claims, wherein when the video data is motion picture data, the texture extracting step comprises the steps of:

   selecting texture data of a first still image at a first period of time; and
   transferring the texture data of the first still data in accordance with moving vectors of the first still image and of a second still image at a second period of time different from the first period of time to obtain texture data of the second still image.

**Patentansprüche**

1. Ein Verfahren zur Komprimierung und Dekomprimierung eines Videosignals, das mindestens ein Bild mit mindestens zwei Dimensionen beinhaltet, wobei das Videosignal Helligkeitsdaten beinhaltet, die in den mindestens zwei Dimensionen verteilt sind, gemäß dem das Videosignal in Codes komprimiert wird und die Codes dekomprimiert werden, um das analoge Videosignal zu reproduzieren, wobei das Verfahren die Schritte beinhaltet:

   Extrahieren einer Anzahl repräsentativer Pixel aus einer Vielzahl von Pixeln, die ein digitales Signal eines Videosignals darstellen, indem Helligkeitskonturlinien in einer Helligkeitsverteilungsfunktion der Helligkeitsdaten verfolgt werden, wobei jede Konturlinie Pixel konstanter Helligkeitswerte verbindet, und Auswählen von Pixeln auf den Helligkeitskonturlinien als die repräsentativen Pixel, so daß an der Stelle jedes repräsentativen Pixels auf der jeweiligen Konturlinie der Krümmungswinkel der Konturlinie größer ist als ein erster vorbestimmter Bezugswert;
   Extrahieren von Texturdaten aus dem digitalen Signal des Videosignals;
   Kodieren der repräsentativen Pixel und der Texturdaten;
   Dekodieren der kodierten repräsentativen Pixel und der Texturdaten; und
   Reproduzieren des Videosignals unter Verwendung der dekodierten repräsentativen Pixel und der dekodierten Texturdaten.

2. Ein Verfahren nach Anspruch 1, wobei der Schritt des Kodierens den Schritt der Orthogonaltransformation der digitalen Videodaten durch diskrete Kosinustransformation beinhaltet.

3. Ein Verfahren nach Anspruch 1, wobei, wenn das Videosignal mehr als ein Bild mit mindestens zwei Dimensionen enthält und die Helligkeitsdaten in den zwei Raumdimensionen und einer Zeitdimension verteilt sind, der Schritt des Extrahierens der Pixel die Schritte beinhaltet:

   Verfolgen von Helligkeitskonturebenen in einer Helligkeitsverteilungsfunktion der Helligkeitsdaten, wobei jede Konturebene Pixel konstanter Helligkeitsdaten verbindet; und
   Auswählen von Pixeln auf den Helligkeitskonturebenen als repräsentative Pixel, so daß an der Stelle jedes repräsentativen Pixels auf der jeweiligen Konturebene der Krümmungswinkel der Konturebene größer ist als der erste vorbestimmte Bezugswert.

4. Ein Verfahren nach Anspruch 1 oder 2, wobei der Schritt des Extrahierens der Pixel weiterhin den Schritt beinhaltet,

   weitere Pixel auf der Helligkeitskonturlinie als repräsentative Pixel auszuwählen, indem der Abstand von einer Linie, die einen ersten Pixel auf der Helligkeitskonturlinie, der bereits als ein repräsentativer Pixel ausgewählt worden ist, und einen zweiten dieser repräsentativen Pixel auf der Helligkeitskonturlinie verbindet, zu einem dritten Pixel auf der Helligkeitskonturlinie bestimmt wird, und dieser Abstand mit einem zweiten vorbestimmten Bezugswert verglichen wird, so daß der dritte Pixel als ein weiterer repräsentativer Pixel ausgewählt wird, wenn der Abstand den zweiten vorbestimmten Bezugswert überschreitet.

5. Ein Verfahren nach Anspruch 3, wobei der Schritt des Extrahierens der Pixel weiterhin den Schritt beinhaltet,

   weitere Pixel auf der Helligkeitskonturebene als repräsentative Pixel auszuwählen, indem der Abstand von einer Linie, die einen ersten Pixel auf der Helligkeitskonturebene, der bereits als ein repräsentativer Pixel ausgewählt worden ist, und einen zweiten dieser repräsentativen Pixel auf der Helligkeitskonturebene verbindet, zu einem dritten Pixel auf der Helligkeitskonturebene bestimmt wird, und dieser Abstand mit einem zweiten vorbestimmten Bezugswert verglichen wird, so daß der dritte Pixel als ein weiterer repräsentativer Pixel ausgewählt wird, wenn der Abstand den zweiten vorbestimmten Bezugswert übersteigt.

6. Ein Verfahren nach einem der vorhergehenden Ansprüche, wobei der Schritt des Extrahierens der Textur die Schritte beinhaltet:

   Orthogonaltransformation eines Bereiches, der eine räumliche Frequenzkomponente beinhaltet, die größer ist als eine räumliche Bezugsfrequenz in der Helligkeitsfunktion der Helligkeitsdaten, um ein Frequenzspektrenmuster zu erhalten; und
   Extrahieren von Pixeldaten an einer Grenze zwischen mindestens einem ersten und einem zweiten Bereich, die unterschiedliche Absolutwerte des Frequenzspektrenmusters aufweisen, und von Daten der Frequenzspektrenmuster des ersten und zweiten Bereiches als die Texturdaten.

7. Ein Verfahren nach Anspruch 6, wobei der Schritt des Extrahierens der Textur weiterhin die Schritte beinhaltet:

Aufteilen von Bereichen, die jeweils ein Frequenzspektrenmuster aufweisen, dessen Absolutwert gleich dem Absolutwert des Frequenzspektrenmusters in dem ersten oder zweiten Bereich ist, in eine erste oder eine zweite Gruppe; und

Darstellen von Grenzen zwischen Bereichen in jeder der ersten und zweiten Gruppe mit den repräsentativen Pixeln.

8. Ein Verfahren nach Anspruch 6, das den Schritt des Auswählens eines vorbestimmten Frequenzspektrenmusters beinhaltet, basierend auf den repräsentativen Pixeln.

9. Ein Verfahren nach einem der Ansprüche 6 bis 8, wobei der Dekodierungsschritt beinhaltet, das Kennzeichen mindestens einer spektralen Komponente des Frequenzspektrenmusters der kodierten Texturdaten bei der Dekodierung der kodierten Texturdaten in Zufallszahlen zu verwandeln.

10. Ein Verfahren nach einem der Ansprüche 6 bis 9, wobei der Dekodierungsschritt beinhaltet, die Phase mindestens einer spektralen Komponente des Frequenzspektrenmusters der kodierten Texturdaten bei der Dekodierung der kodierten Texturdaten in Zufallszahlen zu verwandeln.

11. Ein Verfahren nach einem der vorhergehenden Ansprüche, wobei der Schritt des Reproduzierens den Schritt beinhaltet, Helligkeitsdaten von Pixeln, die die Videodaten darstellen und die nicht die repräsentativen Pixel sind, durch Interpolation festzulegen, mit Helligkeitswerten einer Interpolationsebene, die mit den dekodierten repräsentativen Pixeln gebildet wird.

12. Ein Verfahren nach einem der vorhergehenden Ansprüche, wobei, wenn die Videodaten Bewegtbilddaten sind, der Schritt des Extrahierens der Textur die Schritte beinhaltet:

Texturdaten eines ersten Standbildes in einer ersten Zeitspanne auszuwählen; und die Texturdaten des ersten Standbildes, gemäß der Bewegungsvektoren des ersten Standbildes und eines zweiten Standbildes in einer zweiten Zeitspanne, die von der ersten Zeitspanne verschieden ist, zu übertragen, um Texturdaten des zweiten Standbildes zu erhalten.

**Revendications**

1. Procédé de compression et de décompression d'un signal vidéo contenant au moins une image en au moins deux dimensions, ledit signal vidéo comportant des données de luminances réparties au moins dans les deux dimensions, ledit signal vidéo étant compressé en codes, les codes étant décompressés de manière à reproduire le signal vidéo analogique, le procédé comprenant les étapes consistant à :

- extraire un certain nombre de pixels représentatifs parmi une pluralité de pixels constituant un signal numérique du signal vidéo, en traçant des lignes de contour de luminance dans une fonction de répartition de luminance des données de luminance, chaque ligne de contour raccordant des pixels de valeur de luminance constante et sélectionner les pixels situés sur les lignes de contours de luminance en tant que pixels représentatifs, de façon que dans la position de chaque pixel représentatif sur la ligne de contour respective, l'angle de courbure de la ligne de contour soit supérieur à une première valeur de référence prédéterminée ;

- extraire les données de texture du signal numérique du signal vidéo ;

- coder les pixels représentatifs et les données de texture ;

- décoder les pixels représentatifs codés et les données de texture ; et

- reproduire le signal vidéo en utilisant les pixels représentatifs décodés et les données de texture décodées.

2. Procédé selon la revendication 1, dans lequel l'étape de codage comporte l'étape de transformation orthogonale des données vidéo numériques par transformations en cosinus discret.

3. Procédé selon la revendication 1, dans lequel le signal vidéo contient plus d'une image d'au moins deux dimensions et les données de luminance sont réparties dans les deux dimensions dans l'espace et une dimension dans le temps et l'étape d'extraction de pixels comprend les étapes consistant à :

- tracer des plans de contour de luminance dans une fonction de répartition de luminance des données de luminance, chaque plan de contour raccordant des pixels de valeur de luminance constante ; et

- sélectionner les pixels situés sur les plans de contour de luminance en tant que pixels représentatifs, de façon que dans la position de chaque pixel représentatif sur le plan de contour respectif, l'angle de courbure du plan de contour soit supérieur à la première valeur de référence prédéterminée.

4. Procédé selon la revendication 1 ou 2, dans lequel l'étape d'extraction de pixels comporte en outre l'étape consistant à
sélectionner d'autres pixels sur la ligne de contour de luminance en tant que pixels représentatifs par obtention de la distance entre une ligne raccordant un premier pixel situé sur la ligne de contour de luminance qui a déjà été sélectionné en tant que pixel représentatif et un deuxième desdits pixels représentatifs situé sur la ligne de contour de luminance, et un troisième pixel situé sur la ligne de contour de luminance et comparer ladite distance à une deuxième valeur de référence prédéterminée, de façon à sélectionner ledit troisième pixel en tant qu'autre pixel représentatif lorsque ladite distance dépasse ladite deuxième valeur de référence prédéterminée.

5. Procédé selon la revendication 3, dans lequel l'étape d'extraction de pixels comporte en outre l'étape consistant à
sélectionner d'autres pixels sur le plan de contour de luminance en tant que pixels représentatifs par obtention de la distance entre une ligne raccordant un premier pixel situé sur le plan de contour de luminance qui a déjà été sélectionné en tant que pixel représentatif et un deuxième desdits pixels représentatifs situé sur le plan de contour de luminance, et un troisième pixel situé sur le plan de contour de luminance et comparer ladite distance à une deuxième valeur de référence prédéterminée, de façon à sélectionner ledit troisième pixel en tant qu'autre pixel représentatif lorsque ladite distance dépasse ladite deuxième valeur de référence prédéterminée.

6. Procédé selon l'une quelconque des revendications précédentes, l'étape d'extraction de texture comprenant les étapes consistant à :

- transformer orthogonalement une aire comportant une composante de fréquence spatiale supérieure à une fréquence spatiale de référence dans la fonction de luminance des données de luminance pour obtenir un motif de spectre de fréquence ; et

- extraire les données des pixels situés sur une limite entre au moins une première et une deuxième aires ayant des valeurs absolues différentes du profil du spectre de fréquence et des données des profils du spectres de fréquences des première et deuxième aires en tant que données de texture.

7. Procédé selon la revendication 6, l'étape d'extraction de texture comprenant en outre les étapes consistant à :

- répartir les aires ayant chacune un profil de spectre de fréquence dont la valeur absolue est égale à la valeur absolue du motif de spectre de fréquence sur la première ou la deuxième aires dans un premier ou un deuxième groupe ; et

- représenter les limites entre aires dans chacun des premier et deuxième groupes avec les pixels représentatifs.

8. Procédé selon la revendication 6, comprenant l'étape consistant à sélectionner un profil de spectre de fréquence prédéterminé basé sur les pixels représentatifs.

9. Procédé selon l'une quelconque des revendications 6 à 8, l'étape de décodage comprenant l'étape de randomisation du signe d'au moins une composante spectrale du profil de spectre de fréquence des données de texture codées pendant le décodage des données de texture codées.

10. Procédé selon l'une quelconque des revendications 6 à 9, l'étape de décodage comprenant l'étape de randomisation de la phase d'au moins une composante spectrale du profil de spectre de fréquence des données de texture codées pendant le décodage des données de texture codées.

11. Procédé selon l'une quelconque des revendications précédentes, l'étape de reproduction comprenant l'étape de décision des données de luminance des pixels à l'exception des pixels représentatifs constituant les données vidéos par interpolation avec les valeurs de luminance d'un plan d'interpolation formé avec les pixels représentatifs décodés.

12. Procédé selon l'une quelconque des revendications précédentes, dans lequel, lorsque les données vidéo sont des données d'images animées, l'étape d'extraction de texture comprend les étapes consistant à :

- sélectionner les données de texture d'une première image fixe à un premier instant ; et

- transférer les données de texture des premières données fixes en fonction de vecteurs mobiles de la première image fixe et d'une deuxième image fixe à un deuxième instant différent du premier instant, pour obtenir les données de texture de la deuxième image fixe.

FIG. 1A

FIG. 1B

FIG. 2

FIG.3

F I G. 4 A

F I G. 4 B

F I G. 5

F I G. 6

F I G. 7

F I G. 8A

F I G. 8B

F I G. 8C

F I G. 8D

FIG. 9A

FIG. 9B    FIG. 9C    FIG. 9D

FIG. 9E

FIG. 9F    FIG. 9G    FIG. 9H

FIG.10

VIDEO MEMORY 3 → [DCT] ⌇5 1 → [PATTERN MEMORY] ⌇5 2 → [BORDERLINE DET] ⌇5 3

[PATTERN BOOK] ⌇5 5

[FEATURE POINT DET] ⌇5 4

↓ CODER XMTR 6

FIG.11

FIG.12

FIG.13

EP 0 671 845 B1

FIG.14

F I G. 15

F I G. 16